# EUROPÄISCHE PATENTANMELDUNG

(11) **EP 2 960 562 A1**
(43) Veröffentlichungstag der Anmeldung: **30.12.2015**
(21) Anmeldenummer: 15173237.7
(22) Anmeldetag: 23.06.2015
(51) Int. Cl.: F16K 31/50, E05F 3/12, F16K 1/04

(54) **VENTILANORDNUNG**

(30) Priorität: 24.06.2014 DE 102014212065
(71) Anmelder: GEZE GmbH, 71229 Leonberg (DE)
(72) Erfinder: Walter, Ingo, 70184 Stuttgart (DE)

(57) **Zusammenfassung**

Eine Ventilanordnung (10) insbesondere für einen Antrieb einer Tür oder eines Fensters umfasst ein einen Ventilkörper (12) aufweisendes Regulierventil (14), das in einer mit einem Innengewinde (16) versehenen Aufnahmebohrung (18) angeordnet und durch Drehen um seine Längsachse (L) zur variablen Einstellung eines einem Hydraulikkanal (20) zugeordneten Drosselspaltes (22) axial verstellbar ist. Der Ventilkörper (12) des Regulierventils (14) umfasst einen als drehbares Stellglied dienenden ersten Ventilkörperteil (24) mit einem mit dem Innengewinde (16) der Aufnahmebohrung (18) zusammenwirkenden Außengewinde (26) sowie einen im Bereich des Drosselspaltes (22) angeordneten, als Steuerteil dienenden zweiten Ventilkörperteil (28), der in der Aufnahmebohrung (18) axial verschiebbar und drehgesichert ist sowie eine mit einem Innengewinde (30) versehene Bohrung (32) aufweist, in die ein mit einem Außengewinde (34) versehener Fortsatz (36) des ersten Ventilkörperteils (24) eingreift. Dabei ist die Gewindesteigung der zusammenwirkenden Gewinde (30,34) des zweiten Ventilkörperteils (28) und des Fortsatzes (36) des ersten Ventilkörperteils (24) kleiner als die Gewindesteigung der zusammenwirkenden Gewinde (26,16) des ersten Ventilkörperteils (24) und der Aufnahmebohrung (18).

## Beschreibung

Die vorliegende Erfindung betrifft eine Ventilanordnung insbesondere für einen Antrieb einer Tür oder eines Fensters, mit einem einen Ventilkörper umfassenden Regulierventil, das in einer mit einem Innengewinde versehenen Aufnahmebohrung angeordnet und durch Drehen um seine Längsachse zur variablen Einstellung eines einem Hydraulikkanal zugeordneten Drosselspaltes axial verstellbar ist.

Antriebe für Türen oder Fenster sind an sich bekannt und können als manuelle oder automatische Antriebe ausgeführt sein. In bekannter Weise umfasst ein derartiger Antrieb ein Gehäuse mit einer Bohrung, in der ein Arbeitskolben angeordnet ist, der mit einer Abtriebswelle getriebemäßig zusammenwirkt. Auf der Abtriebswelle kann ein Gestänge oder ein Gleitarm drehfest angeordnet sein. Der Antrieb kann wahlweise an einem Flügel der Tür oder des Fensters oder an deren Umrahmung angeordnet sein. Entsprechend stützt sich das Gestänge oder der Gleitarm am Rahmen oder dem Flügel ab, wodurch eine Verbindung zwischen der Schwenkbewegung des Flügels und dem Antrieb bewirkt wird.

Im mit einer Hydraulikflüssigkeit gefüllten Gehäuse ist zudem eine Feder angeordnet, die bei einer Drehbewegung der Abtriebswelle beim manuellen oder beispielsweise durch eine Hydraulikpumpe bewirkten automatischen Öffnen des Flügels durch Verschieben des Arbeitskolbens komprimiert wird und als Energiespeicher zum selbsttätigen Schließen des Flügels dient. Der Innenraum des Gehäuses ist durch den Kolben in mehrere Räume aufgeteilt. Zwischen diesen Räumen sind Hydraulikkanäle mit zugeordneten Ventilen zur Beeinflussung des Überströmens der Hydraulikflüssigkeit angeordnet, die der Steuerung des Antriebsverhaltens dienen.

Die Ventile sind jeweils in einer mit einem Gewinde versehenden Bohrung im Gehäuse des Antriebs angeordnet und werden durch Drehen eingestellt, wodurch ein Abschnitt des Ventils relativ zu einem in dem Hydraulikkanal angeordneten Ventilsitz verlagert wird und so den Hydraulikkanal mehr oder weniger weit öffnet bzw. schließt.

Bei den bisher üblichen Ventilanordnungen der eingangs genannten Art, wie sie beispielsweise bei Türschließern oder dergleichen eingesetzt werden, wird der Hydraulikflüssigkeitsstrom meistens über sehr kleine Drosselspalte reguliert. Zur Einstellung des betreffenden Drosselspaltes ist der Ventilkörper der bisher bekannten Regulierventile mit einem Verstellgewinde versehen, dessen Gewindesteigung typischerweise in einem Bereich von etwa 0,5 mm bis etwa 0,75 mm je Umdrehung des Ventilkörpers liegt. Der erforderliche Stellbereich in axialer Richtung beträgt nun aber in der Regel nur einige wenige hundertstel Millimeter, so dass es sehr schwierig ist, die Ventile von Hand einzustellen.

Der Erfindung liegt somit die Aufgabe zugrunde, eine verbesserte Ventilanordnung der eingangs genannten Art anzugeben, mit der auf möglichst einfache Weise insbesondere auch manuell eine Feineinstellung möglich ist.

Erfindungsgemäß wird diese Aufgabe durch eine Ventilanordnung mit den Merkmalen des Anspruchs 1 gelöst. Bevorzugte Ausführungsformen der erfindungsgemäßen Ventilanordnung sind in den Unteransprüchen angegeben.

Die erfindungsgemäße Ventilanordnung zeichnet sich dadurch aus, dass der Ventilkörper des Regulierventils einen als drehbares Stellglied dienenden ersten Ventilkörperteil mit einem mit dem Innengewinde der Aufnahmebohrung zusammenwirkenden Außengewinde sowie einen im Bereich des Drosselspaltes angeordneten, als Steuerteil dienenden zweiten Ventilkörperteil umfasst, der in der Aufnahmebohrung axial verschiebbar und drehgesichert ist sowie eine mit einem Innengewinde versehene Bohrung aufweist, in die ein mit einem Außengewinde versehener Fortsatz des ersten Ventilkörperteils eingreift, wobei die Gewindesteigung der zusammenwirkenden Gewinde des zweiten Ventilkörperteils und des Fortsatzes des ersten Ventilkörperteils kleiner ist als die Gewindesteigung der zusammenwirkenden Gewinde des ersten Ventilkörperteils und der Aufnahmebohrung.

Infolge der Differenz der Gewindesteigungen wird der als Steuerteil zur Ansteuerung des Drosselspaltes dienende zweite Ventilkörperteil mit einer jeweiligen Drehung des als Stellglied dienenden ersten Ventilkörperteils um einen entsprechend kleineren Betrag je Umdrehung des ersten Ventilkörperteils in axialer Richtung verstellt, womit entsprechend eine Feineinstellung ermöglicht wird. Mit der erfindungsgemäßen Ventilanordnung ist somit eine wesentlich feinere Regulierung möglich, was insbesondere dann von Vorteil ist, wenn eine manuelle Einstellung vorgenommen werden muss.

Der zweite Ventilkörper kann insbesondere durch eine Übergangspassung oder einen Formschluss in der Aufnahmebohrung drehgesichert sein.

Gemäß einer zweckmäßigen praktischen Ausführungsform der erfindungsgemäßen Ventilanordnung umfasst der erste Ventilkörperteil einen Ventilkopf, der mit einer Werkzeugaufnahme für ein Werkzeug wie beispielsweise einen Schraubendreher oder dergleichen versehen ist. Mittels eines solchen Werkzeugs kann das Ventil dann manuell eingestellt werden, wobei aufgrund der Differenz der Gewindesteigungen insbesondere auch bei einer manuellen Betätigung eine besonders feine Einstellung ermöglicht wird.

Die Ventilanordnung kann beispielsweise so ausgeführt sein, dass die im Hydraulikkanal geführte Hydraulikflüssigkeit über eine Eintrittsöffnung in die Aufnahmebohrung eintritt und über eine dieser Eintrittsöffnung gegenüberliegende Austrittsöffnung wieder aus der Aufnahmebohrung austritt.

Der als Steuerteil zur Ansteuerung des Drosselspaltes dienende zweite Ventilkörperteil kann insbesondere eine zylindrische Form besitzen oder beispielsweise auch kegelförmig ausgeführt sein.

Bevorzugt ist der erste Ventilkörperteil mit einer ringförmigen Nut versehen, in der ein Dichtring angeordnet ist.

Dabei kann der Dichtring beispielsweise durch ein Spritzgusswerkzeug so ausgeformt sein, dass er zumindest zu einer Flanke der ringförmigen Nut in einem Abstand angeordnet ist, so dass ausreichend Raum für ein elastisches Ausweichen des Dichtrings bei dessen Verformung in der Aufnahmebohrung gegeben ist. Zur anderen Flanke der Nut hin kann am Dichtring beispielsweise ein ringförmiger Materialansatz vorgesehen sein, durch den der im montierten Zustand an der Wandung der Aufnahmebohrung anliegende dichtende Bereich des Dichtrings in einem Abstand zu dieser Flanke positioniert ist. Dabei kann der Materialansatz insbesondere einen geringeren Durchmesser als der Dichtring aufweisen und gegenüber der betreffenden Flanke radial zurückgesetzt sein, so dass auch in Richtung dieser Flanke ausreichend Raum für eine elastische Verformung des Dichtrings vorhanden ist.

Von Vorteil ist insbesondere auch, wenn der erste Ventilkörperteil mit einem in einer ringförmigen Nut angeordneten Sicherungsring zur Sicherung des ersten Ventilkörperteils gegen Verdrehen versehen ist. Dadurch ein ungewolltes Verstellen des Ventils verhindert.

Dabei ist dieser Sicherungsring bevorzugt axial zwischen dem Dichtring und der von außen zugänglichen Stirnseite des Ventilkörperteils angeordnet. Damit dichtet der Dichtring die Hydraulikflüssigkeit nach außen hin ab, während der Sicherungsring weiter außen im abgedichteten trockenen Bereich der Aufnahmebohrung liegt, wodurch eine gleichbleibend hohe Bremswirkung durch Reibung zwischen dem Sicherungsring und der Wandung der Aufnahmebohrung erzielt wird.

Die Erfindung wird im Folgenden anhand von Ausführungsbeispielen unter Bezugnahme auf die Zeichnung näher erläutert; in dieser zeigen:
- Fig. 1: eine schematische Darstellung einer beispielhaften Ausführungsform einer erfindungsgemäßen Ventilanordnung,
- Fig. 2: eine schematische Darstellung der Ventilanordnung gemäß Fig. 1 nach einem erfolgten Verdrehen des ersten Ventilkörperteils,
- Fig. 3: eine schematische Darstellung einer weiteren beispielhaften Ausführungsform der erfindungsgemäßen Ventilanordnung, und
- Fig. 4: eine schematische Darstellung der Ventilanordnung gemäß Fig. 3 nach einem erfolgten Verdrehen des ersten Ventilkörperteils.

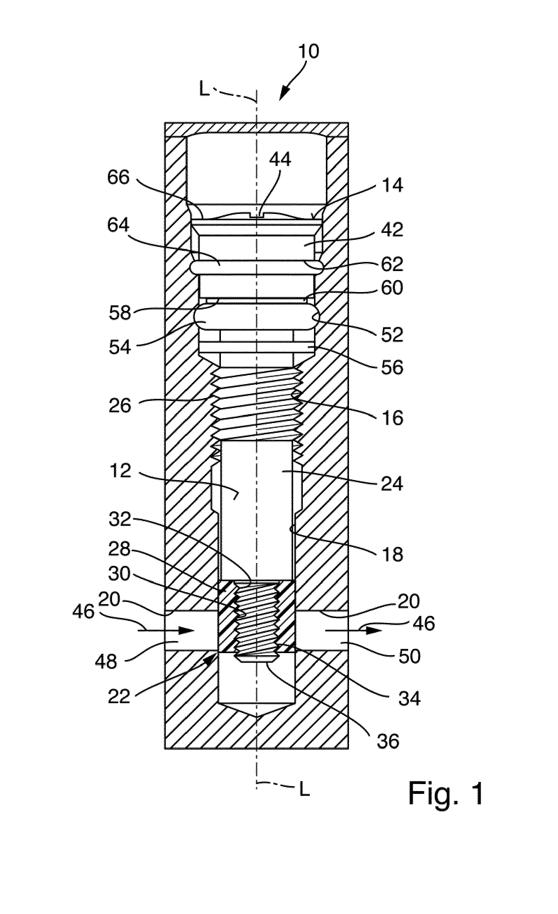

Fig. 1 zeigt in schematischer Darstellung eine beispielhafte Ausführungsform einer erfindungsgemäßen Ventilanordnung 10, die beispielsweise für einen Antrieb einer Tür oder eines Fensters vorgesehen sein kann.

Die Ventilanordnung 10 umfasst ein einen Ventilkörper 12 aufweisendes Regulierventil 14, das in einer mit einem Innengewinde 16 versehenen Aufnahmebohrung 18 beispielsweise eines Antriebsgehäuses angeordnet und durch Drehen um seine Längsachse L zur variablen Einstellung eines einem Hydraulikkanal 20 zugeordneten Drosselspaltes 22 axial verstellbar ist.

Der Ventilkörper 12 des Regulierventils 14 umfasst einen als drehbares Stellglied dienenden ersten Ventilkörper 24 mit einem mit dem Innengewinde 16 der Aufnahmebohrung 18 zusammenwirkenden Außengewinde 26 sowie einen im Bereich des Drosselspaltes 22 angeordneten, als Steuerteil dienenden zweiten Ventilkörper 28.

Der zweite Ventilkörper 28 ist in der Aufnahmebohrung 18 axial verschiebbar und drehgesichert aufgenommen und weist eine mit einem Innengewinde 30 versehene Bohrung 32 auf, in die ein mit einem Außengewinde 34 versehener Fortsatz 36 des ersten Ventilkörpers 24 eingreift. Dabei ist die Gewindesteigung der zusammenwirkenden Gewinde 30, 34 des zweiten Ventilkörperteils 28 und des Fortsatzes 36 des ersten Ventilkörperteils 24 kleiner als die Gewindesteigung der zusammenwirkenden Gewinde 26, 16 des ersten Ventilkörperteils 24 und der Aufnahmebohrung 18.

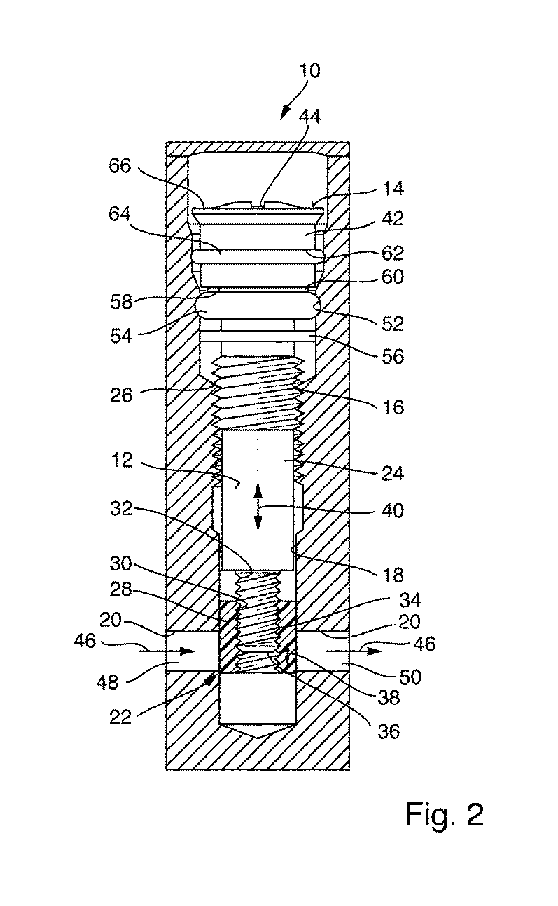

Wie am besten anhand der Fig. 2 zu erkennen ist, in der die Ventilanordnung 10 gemäß Fig. 1 nach einem erfolgten Verdrehen des ersten Ventilkörperteils 24 wiedergegeben ist, wird aufgrund der Differenz der Gewindesteigungen mit einer jeweiligen Drehung des als Stellglied dienenden ersten Ventilkörperteils 24 der als Steuerteil dienende zweite Ventilkörperteil 28 um einen wesentlich kleineren Betrag 38 in axialer Richtung verstellt, als dies beim ersten Ventilkörperteil 24 der Fall ist, der um einen größeren Betrag 40 verstellt wird. Demzufolge kann das Regulierventil 14 beispielsweise auch von Hand wesentlich feiner eingestellt werden.

Die Aufnahmebohrung 18 kann, wie bereits erwähnt, beispielsweise im Gehäuse eines Antriebs für eine Tür oder ein Fenster vorgesehen sein, in dem in an sich bekannter Weise beispielsweise ein Kolben und ein eine Feder umfassender Energiespeicher in einem mit Hydraulikflüssigkeit gefüllten Raum angeordnet sind. In einem solchen Fall wird der Energiespeicher durch manuelles oder automatisches Öffnen des Flügels der Tür bzw. des Fensters aufgeladen und bewirkt, dass der Flügel nach dem Öffnen wieder selbsttätig in seine geschlossene Lage überführt wird. Der Antrieb bewirkt die Krafteinleitung auf den Flügel über ein gelenkig verbundenes Gestänge oder über einen in einer Gleitschiene mittels eines Gleitsteins geführten Gleitarm, das bzw. der an einer Abtriebswelle, die mit dem Kolben wirkmäßig verbunden ist, drehfest angeordnet ist. Im Antriebsgehäuse sind zudem Hydraulikkanäle und Regulierventile angeordnet, mittels derer ein Überströmen der Hydraulikflüssigkeit von einer Kolbenseite zur anderen zur Steuerung des Verhaltens des Antriebs möglich ist. Mittels der Regulierventile ist beispielsweise eine Schließgeschwindigkeit, eine Schließverzögerung, eine Öffnungsdämpfung und/oder dergleichen einstellbar. Dabei können die Regulierventile jeweils in einer mit einem Gewinde versehenen Bohrung im Antriebsgehäuse angeordnet sein, in der auch der Ventilsitz des zugeordneten Hydraulikkanals ausgebildet ist.

Auch die vorliegende erfindungsgemäße Ventilanordnung 10 ist beispielsweise bei einem derartigen Tür- oder Fensterantrieb einsetzbar.

Der zweite Ventilkörperteil 28 des Regulierventils 14 der erfindungsgemäßen Ventilanordnung kann insbesondere durch eine Übergangspassung oder einen Formschluss in der Aufnahmebohrung 18 drehgesichert sein.

Wie anhand der Fig. 1 zudem zu erkennen ist, kann der erste Ventilkörperteil 24 einen Ventilkopf 42 umfassen, der mit einer Werkzeugaufnahme 44 für ein Werkzeug wie insbesondere einen Schraubendreher oder dergleichen versehen ist. Über einen solchen Schraubendreher kann das Ventil insbesondere auch manuell betätigt werden.

Die im Hydraulikkanal 20 geführte Hydraulikflüssigkeit 46 kann über eine Eintrittsöffnung 48 in die Aufnahmebohrung 18 eintreten und beispielsweise über eine dieser Eintrittsöffnung 48 gegenüberliegende Austrittsöffnung 50 wieder aus der Aufnahmebohrung 18 austreten.

Wie der Fig. 1 überdies entnommen werden kann, kann der erste Ventilkörperteil 24 mit einer ringförmigen Nut 52 versehen sein, in der ein Dichtring 54 angeordnet ist. Dabei kann der Dichtring 54 beispielsweise durch ein nicht dargestelltes Spritzgusswerkzeug so ausgeformt sein, dass er beispielsweise zur unteren Flanke 56 der Nut beabstandet ist, wodurch ausreichend Raum für ein elastisches Ausweichen des Dichtrings 54 bei dessen Verformung in der Aufnahmebohrung 18 gegeben ist. Zur gegenüberliegenden Flanke 58 der Nut 52 hin kann beispielsweise ein ringförmiger Materialansatz 60 am Dichtring 54 vorgesehen sein, dessen Außendurchmesser kleiner als der Innendurchmesser des benachbarten Abschnitts der Aufnahmebohrung 18 ist, so dass auch in Richtung der Flanke 58 ausreichend Raum für eine elastische Verformung des Dichtrings 54 gegeben ist.

Zudem kann der erste Ventilkörper 24 mit einem in einer ringförmigen Nut 62 angeordneten Sicherungsring 64 zur Sicherung des ersten Ventilkörperteils 24 gegen Verdrehen versehen sein.

Der Dichtring 54 dichtet die Hydraulikflüssigkeit nach außen hin ab. Der Sicherungsring 64 ist wie dargestellt zweckmäßigerweise außerhalb des durch den Dichtring 54 abgedichteten trockenen Bereichs der Aufnahmebohrung 18 angeordnet, so dass eine gleichbleibende hohe Bremswirkung durch Reibung zwischen dem Sicherungsring 64 und der Wandung der Aufnahmebohrung 18 gewährleistet ist. Demgegenüber trägt der Dichtungsring 54 nur gering zu einer Verdrehsicherung bei, da eine teilweise Benetzung durch Hydraulikflüssigkeit möglich ist. Der Sicherungsring 64 ist im vorliegenden Fall also axial zwischen dem Dichtring 54 und der von außen zugänglichen, die Werkzeugaufnahme 44 aufweisenden Stirnseite 66 des ersten Ventilkörperteils 24 angeordnet.

Bei der vorliegenden, in den Fig. 1 und 2 dargestellten Ausführungsform der Ventilanordnung 10 besitzt der als Steuerteil dienende zweite Ventilkörper 28 eine zylindrische Form.

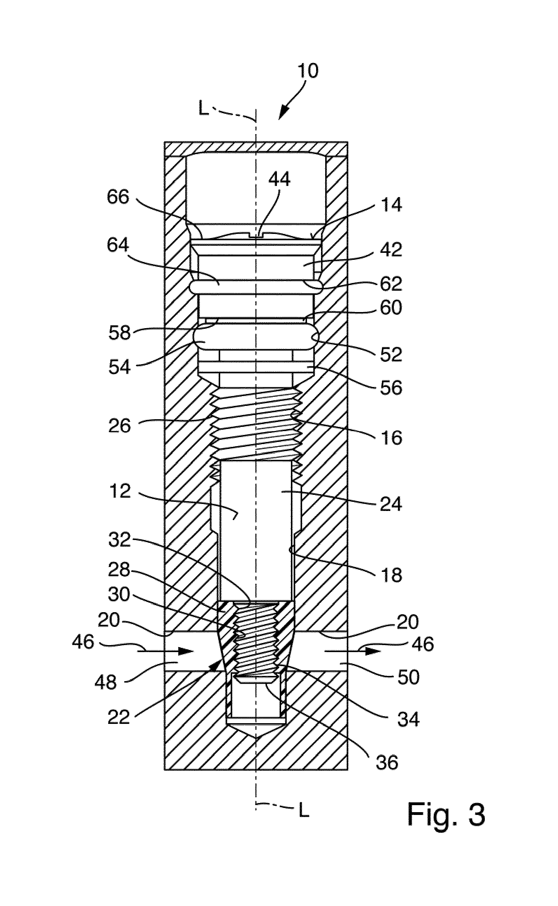

Fig. 3 zeigt in schematischer Darstellung eine weitere beispielhafte Ausführungsform der erfindungsgemäßen Ventilanordnung 10, die sich von der Ausführungsform gemäß der Fig. 1 und 2 im Wesentlichen nur dadurch unterscheidet, dass der als Steuerteil dienende zweite Ventilkörperteil 28 kegelförmig ausgeführt ist. Im Übrigen besitzt diese Ventilanordnung 10 zumindest im Wesentlichen wieder denselben Aufbau wie die in den Fig. 1 und 2 dargestellte Ausführungsform. Einander entsprechenden Teilen sind gleiche Bezugszeichen zugeordnet.

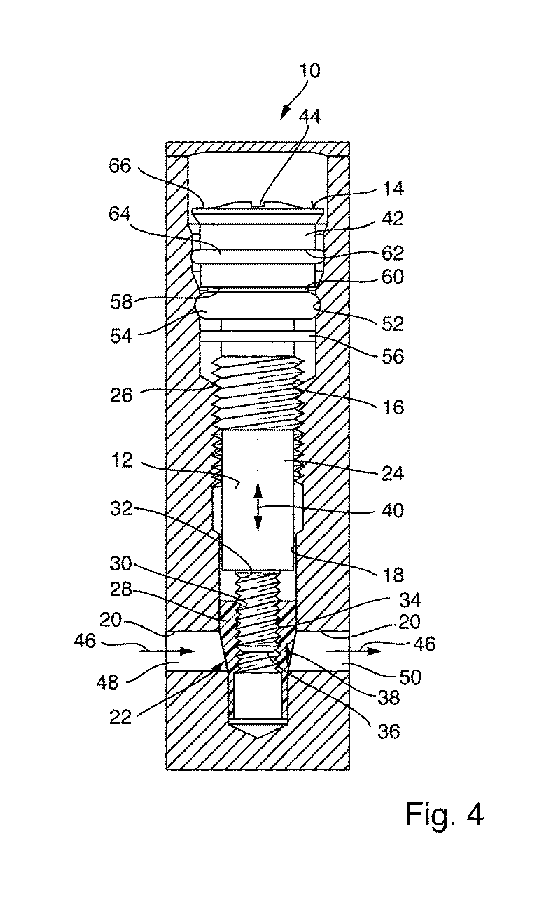

Fig. 4 zeigt die Ventilanordnung 10 gemäß Fig. 3 wieder nach einem erfolgten Verdrehen des ersten Ventilkörperteils 24. Dabei ist wieder zu erkennen, dass der zweite Ventilkörperteil 28 aufgrund der Differenz der Gewindesteigungen mit einer jeweiligen Drehung des ersten Ventilkörperteils 24 um einen wesentlich kleineren Betrag 38 in axialer Richtung verstellt wird als der erste Ventilkörperteil 24, der um den größeren Betrag 40 in axialer Richtung verstellt wird.

### Bezugszeichenliste

- 10: Ventilanordnung
- 12: Ventilkörper
- 14: Regulierventil
- 16: Innengewinde
- 18: Aufnahmebohrung
- 20: Hydraulikkanal
- 22: Drosselspalt
- 24: erster Ventilkörperteil
- 26: Außengewinde
- 28: zweiter Ventilkörperteil
- 30: Innengewinde
- 32: Bohrung
- 34: Außengewinde
- 36: Fortsatz
- 38: Betrag
- 40: Betrag
- 42: Ventilkopf
- 44: Werkzeugaufnahme
- 46: Hydraulikflüssigkeit
- 48: Eintrittsöffnung
- 50: Austrittsöffnung
- 52: ringförmige Nut
- 54: Dichtring
- 56: untere Flanke
- 58: obere Flanke
- 60: ringförmiger Materialansatz
- 62: ringförmige Nut
- 64: Sicherungsring
- 66: Stirnseite

- L: Längsachse

## Patentansprüche

1. Ventilanordnung (10) insbesondere für einen Antrieb einer Tür oder eines Fensters, mit einem einen Ventilkörper (12) umfassenden Regulierventil (14), das in einer mit einem Innengewinde (16) versehenen Aufnahmebohrung (18) angeordnet und durch Drehen um seine Längsachse (L) zur variablen Einstellung eines einem Hydraulikkanal (20) zugeordneten Drosselspaltes (22) axial verstellbar ist,
**dadurch gekennzeichnet , dass** der Ventilkörper (12) des Regulierventils (14) einen als drehbares Stellglied dienenden ersten Ventilkörperteil (24) mit einem mit dem Innengewinde (16) der Aufnahmebohrung (18) zusammenwirkenden Außengewinde (26) sowie einen im Bereich des Drosselspaltes (22) angeordneten, als Steuerteil dienenden zweiten Ventilkörperteil (28) umfasst, der in der Aufnahmebohrung (18) axial verschiebbar und drehgesichert ist sowie eine mit einem Innengewinde (30) versehene Bohrung (32) aufweist, in die ein mit einem Außengewinde (34) versehener Fortsatz (36) des ersten Ventilkörperteils (24) eingreift, wobei die Gewindesteigung der zusammenwirkenden Gewinde (30, 34) des zweiten Ventilkörperteils (28) und des Fortsatzes (36) des ersten Ventilkörperteils (24) kleiner ist als die Gewindesteigung der zusammenwirkenden Gewinde (26, 16) des ersten Ventilkörperteils (24) und der Aufnahmebohrung (18).

2. Ventilanordnung nach Anspruch 1,
**dadurch gekennzeichnet, dass** der zweite Ventilkörperteil (28) durch eine Übergangspassung oder einen Formschluss in der Aufnahmebohrung (18) drehgesichert ist.

3. Ventilanordnung nach Anspruch 1 oder 2,
**dadurch gekennzeichnet, dass** der erste Ventilkörperteil (24) einen Ventilkopf (42) umfasst, der mit einer Werkzeugaufnahme (44) für ein Werkzeug versehen ist.

4. Ventilanordnung nach zumindest einem der vorstehenden Ansprüche,
**dadurch gekennzeichnet, dass** die im Hydraulikkanal (20) geführte Hydraulikflüssigkeit (46) über eine Eintrittsöffnung (48) in die Aufnahmebohrung (18) eintritt und über eine dieser Eintrittsöffnung (48) gegenüberliegende Austrittsöffnung (50) wieder aus der Aufnahmebohrung (18) austritt.

5. Ventilanordnung nach zumindest einem der vorstehenden Ansprüche,
**dadurch gekennzeichnet, dass** der zweite Ventilkörperteil (28) eine zylindrische Form besitzt.

6. Ventilanordnung nach einem der Ansprüche 1 bis 4,
**dadurch gekennzeichnet, dass** der zweite Ventilkörperteil (28) kegelförmig ausgeführt ist.

7. Ventilanordnung nach zumindest einem der vorstehenden Ansprüche,
**dadurch gekennzeichnet, dass** der erste Ventilkörperteil (24) mit einer ringförmigen Nut (52) versehen ist, in der ein Dichtring (54) angeordnet ist.

8. Ventilanordnung nach Anspruch 7,
**dadurch gekennzeichnet, dass** der Dichtring (54) in einem Abstand zu einer Flanke (56) der ringförmigen Nut (52) angeordnet ist.

9. Ventilanordnung nach zumindest einem der vorstehenden Ansprüche,
**dadurch gekennzeichnet, dass** der erste Ventilkörperteil (24) mit einem in einer ringförmigen Nut (62) angeordneten Sicherungsring (64) zur Sicherung des ersten Ventilkörperteils (24) gegen Verdrehen versehen ist.

10. Ventilanordnung nach Anspruch 9,
**dadurch gekennzeichnet , dass** der Sicherungsring (64) axial zwischen dem Dichtring (54) und der von außen zugänglichen Stirnseite (66) des ersten Ventilkörperteils (24) angeordnet ist.
